# DEMANDE DE BREVET EUROPEEN

(11) **EP 1 903 490 A1**
(43) Date de publication de la demande: **26.03.2008**
(21) Numéro de dépôt: 06291492.4
(22) Date de dépôt: 21.09.2006
(51) Int. Cl.: G06Q 30/00

(54) **Procédé et systeme de traitement par ordinateur d'une base de données de produits de consommation**

(71) Demandeur: Redcats, 57082 Roubaix Cédex 2 (FR)
(72) Inventeur: Berger Duquesne, Fabrice, 92300 Levallois Perret (FR)
(74) Mandataire: Hirsch & Associés

(57) **Abrégé**

L'invention concerne un procédé et un système de traitement par ordinateur d'une base de données de produits de consommation, par exemple des vêtements, accessoires de mode, chaussures, articles de sport, de puériculture, de meubles et de décoration, du linge de maison. Le procédé selon l'invention comprend les étapes de :
- fourniture (S10) d'une base de données comprenant des entités correspondant à des produits de consommation et des attributs de ces entités;
- création d'attributs (S70) de sémantique différente des attributs des entités fournis avec la base de données, par transformation sémantique à l'aide d'un dictionnaire numérique;
- création d'associations (S90) entre des entités de la base de données à partir des attributs créés.

L'invention concerne également un système informatique ainsi qu'un site Internet mettant en oeuvre les étapes du procédé selon l'invention.

## Description

La présente invention concerne un procédé et un système de traitement par ordinateur d'une base de données de produits de consommation, en particulier des vêtements, accessoires de mode, chaussures, articles de sport, de puériculture, de meubles et de décoration, du linge de maison.

Les moteurs de recherche et comparateurs de prix sont actuellement inadaptés à la recherche en ligne de produits tels que ceux décrits ci-dessus. C'est pourquoi les inventeurs de la présente invention se sont fixés pour but de développer un procédé et un système de traitement par ordinateur d'une base de données de produits de consommation adaptée pour la création ou mise à jour ultérieure d'un site Internet facilement navigable par un utilisateur. Ceci n'est actuellement pas possible à partir d'une base de données correspondant par exemple à un catalogue fournisseur de ces produits de consommation, car les données y figurant ne sont pas optimales pour la navigation par un utilisateur.

Il existe donc un besoin pour un tel procédé et un tel système.

L'invention a pour objet un procédé de traitement par ordinateur d'une base de données de produits de consommation, comprenant les étapes de :
- fourniture d'une base de données comprenant des entités correspondant à des produits de consommation et des attributs de ces entités ;
- création d'attributs de sémantique différente des attributs des entités fournis avec la base de données, par transformation sémantique à l'aide d'un dictionnaire numérique;
- création d'associations entre des entités de la base de données à partir des attributs créés..

Dans des modes de réalisation préférés, le procédé selon l'invention comprend une ou plusieurs des caractéristiques suivantes :
- à l'étape de fourniture, la base de données comprend des liens entre les entités et des images correspondant à ces entités et le procédé comprend en outre des étapes : d'analyse par reconnaissance d'images de ces images; et de création d'associations entre ces entités à partir de l'analyse par reconnaissance d'images ;
- le procédé comprend en outre, une étapes de : création de méta données à partir des associations créés entre les entités, à partir des attributs créés et de l'analyse par reconnaissance d'images ;
- le procédé comprend en outre, des étapes de : réception d'une image téléchargée via un site Internet; analyse par reconnaissance d'image de l'image téléchargée ; comparaison avec des images liées à des entités de la base de données ; et sélection d'associations dans la base à partir de la comparaison à l'étape précédente ;
- à l'étape de fourniture de la base de données, certains des attributs fournis sont des textes descriptifs d'entités ; et à l'étape de création d'attributs de sémantique différente, la transformation sémantique opère sur des attributs obtenus à partir de ces textes descriptifs ;
- le procédé comprend en outre, avant l'étape de fourniture de la base de données, des étapes : de valorisation de la base de donnée à partir d'une base de données initiale ; et d'analyse de caractères de données de la base de données initiale non valorisées dans la base de données ;
- le procédé comprend en outre, après l'étape de fourniture et avant l'étape de création d'attributs de sémantique différente, une étape : d'expansion, de traitement puis de réagrégation d'au moins certains des attributs de la base de données afin de normaliser ces attributs ;
- le procédé comprend en outre, avant l'étape de création d'attributs, une étape : d'enrichissement sémantique de la base de données à l'aide d'une table de correspondance ; et
- le procédé comprend en outre, une étape de : mise à jour d'un site Internet à l'aide de la base de données.

L'invention concerne également un système informatique comprenant des moyens de mise en oeuvre des étapes du procédé selon l'invention.

L'invention concerne encore un Site Internet adapté à être mis à jour selon le procédé de l'invention.

D'autres caractéristiques et avantages de l'invention apparaîtront à la lecture de la description détaillée qui suit des modes de réalisation de l'invention, donnés à titre d'exemple uniquement et en références à la figure unique, qui montre un ordinogramme représentant des étapes du procédé selon un mode de réalisation de l'invention.

L'invention propose un procédé de traitement par ordinateur d'une base de données de produits de consommation. Ce procédé comprend une première étape de fourniture d'une base de données initiale comprenant des entités correspondant à des produits de consommation et des attributs de ces entités. Des d'attributs de sémantique différente sont créés par transformation sémantique des attributs initiaux, à l'aide d'au moins un dictionnaire numérique. Les attributs sont transformés de sorte à permettre une création facilitée d'associations entre entités de la base de données, sémantiquement proches de l'utilisateur final. La création ou mise à jour ultérieure d'un site Internet à partir de cette base de données permettra une navigation aisée d'un utilisateur, utilisant des associations basées sur une sémantique différente, axée sur des besoins utilisateurs.

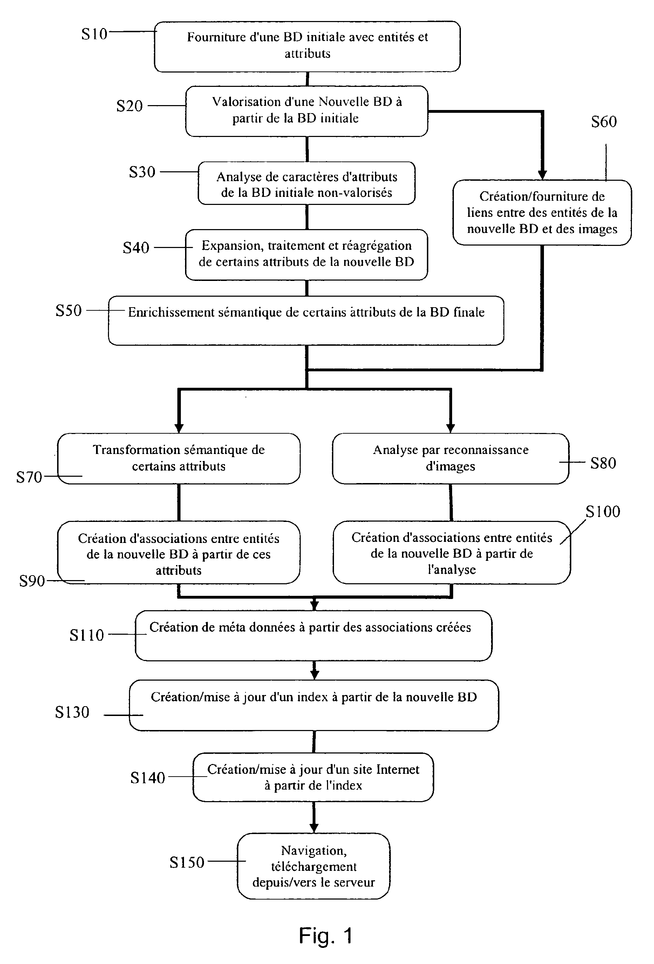

En référence à la figure 1 : le procédé selon l'invention comprend une première étape S 10 de fourniture d'une base de données initiale. Cette base de données initiale comprend des entités correspondant à des produits de consommation, par exemple des articles de mode, et des attributs de ces entités. Cette base de données initiale est typiquement une base de données correspondant à un catalogue de fournisseur (ayant un format électronique, par exemple .csv, .txt, .xml). Ce catalogue comprend typiquement des images associées à des textes descriptifs. On a donc typiquement une entrée (par exemple un manteau jaune, de forme et d'aspect donnés), à laquelle est associée un champ comprenant tout le texte descriptif ainsi que d'autres champs comprenant les références de l'article.

Le procédé comprend de préférence une étape de reformatage S20 de la base de données fournie (ou, vu autrement, de valorisation S20 d'une nouvelle base de données), afin de transformer le texte descriptif associé à un article en attributs d'une entité correspondant à l'article. Concrètement, cette étape transforme des données consignées dans un premier format en des données dans un second format. Cette étape peut nécessiter des techniques de mappage ou mises en correspondance connues de l'art.

Une première transformation lexicale, linguistique ou sémantique peut être effectuée à ce stade, afin de structurer le descriptif. Des mots inutiles peuvent par exemple être éliminés.

Le procédé comprend, de préférence également, une étape d'analyse de caractères S30 de données de la base de données initiale non valorisées dans la base de données. Ceci permet d'attribuer certaines données non encore attribuées.

Le but de cette étape est de catégoriser les entités de la base de données.

Le procédé comprend alors, de préférence, une étape d'expansion S40, de traitement puis de réagrégation d'au moins certains des attributs de la base de données afin de normaliser ces attributs. Par exemple, ceci permet d'intégrer des bases de données de structures différentes. En effet, une base de données initiale peut par exemple être structurée en fonction de produits, de produits et couleurs, de produits et variants ou de variants. Par "variant", on entend une référence rattachée à un produit dont l'ensemble des valeurs d'attributs (couleur, taille, prix) le rendent unique. Par "produit", on entend par conséquent le plus haut niveau de regroupement des références.

La base de données initiale peut ainsi être restructurée selon un modèle unique (par exemple produit/variant), ce qui permet ensuite d'en extraire des données selon une nomenclature et un format communs.

A titre d'exemple encore, il est possible de générer des variants sous chaque entrée (qui est en pratique un libellé de produit). Ainsi, toutes les tailles/couleurs se retrouvent en sous-entrées de chaque libellé de produit.

A l'étape S50, une étape d'enrichissement sémantique de la base de données peut être implémentée, à l'aide par exemple d'une table de correspondance orientée utilisateur. Par exemple, un produit d'une marque donnée peut se voir attribué un attribut renvoyant à une notion compréhensible par un utilisateur. Par exemple, une marque de vêtement de sport peut donner lieu à l'attribution de l'attribut "sportwear". Un style peut donc directement être renseigné en fonction de la marque. Cet enrichissement pourra, le cas échéant, conditionner des étapes ultérieures du procédé. Pour certaines enseignes, la marque pourra directement faire office d'attribut, en fonction de la notoriété de la marque.

Le procédé selon l'invention comprend une étape de création (étape S70) d'attributs de sémantique adaptée à une navigation (étape S150) ultérieure simple, à l'usage des particuliers. Ces attributs sont transformés (S70) à partir des attributs précédents, fournis avec la base de données initiale et le cas échéant reformatés. Pour ce faire, on opère une transformation sémantique à l'aide d'un ou plusieurs dictionnaires numériques.

Ces dictionnaires comprennent au moins une table de correspondance. Vue comme une matrice, cette table comprend un axe d'entrées lexicales correspondant à des notions orientées "utilisateur" (c'est-à-dire de sémantique adaptée). L'autre axe de la table est l'axe lexical orienté catalogue ou fournisseur. Une telle table permet une mise en correspondance de données fournisseur, inadaptées à l'utilisateur, avec des données sémantiquement adaptées.

Des informations de nature sémantique sont associées aux entrées de la table, afin de permettre une transformation et/ou un enrichissement sémantique. Le même dictionnaire peut, le cas échéant, servir à plusieurs stades de transformation.

De préférence, le ou les dictionnaires peuvent également comprendre, pour chaque unité lexicale, des informations de nature notionnelle, référentielle, grammaticale, phonétique, etc., de sorte que plusieurs couches de transformations soient possibles au moyen du ou des dictionnaires en question. Des exemples de transformations sont discutés ci-après.

Un moteur sémantique permettra donc de faire correspondre des attributs initiaux ou un ensemble de données initiales (par exemple des bouts de phrases du descriptif, des phrases entières ou des mots) à des attributs orientés utilisateurs.

Les dictionnaires peuvent, le cas échéant, être sélectionnés en fonction d'attributs des entités. Par exemple, l'étape d'enrichissement sémantique pourra conditionner le choix d'un dictionnaire. Opérer un tel choix améliore l'efficacité et la pertinence de la transformation sémantique.

Plus en détails, la ou les transformations (étape S70) des attributs peuvent comprendre diverses couches de transformations sémantiques (ici pris au sens large). Celles-ci peuvent faire intervenir une recherche lexicale (recherche d'un mot ou d'un ensemble de mots, avec des opérateurs booléens, d'adjacence, de proximité entre les mots, etc.).

Une autre couche de transformation peut faire intervenir une recherche linguistique pour retrouver les mots sous toutes leurs formes possibles, incluant synonymes, mots de même racine étymologique et ayant une proximité phonétique.

La transformation sémantique proprement dite fait intervenir une recherche sémantique, s'appuyant sur le dictionnaire décrit ci-dessus. Ceci permet d'améliorer la mise en correspondance du texte descriptif de départ avec les attributs orientés utilisateur.

L'étape de transformation peut également faire intervenir des recherches statistique, une modélisation mathématique, ou une recherche structurée du type XML ou SGBD.

Grâce à la transformation sémantique et à la création subséquente d'associations (étape S90) entre entités de la base de données, la mise à jour ultérieure d'un site Internet à partir de la base de données transformée permettra une navigation aisée d'un utilisateur, utilisant des associations basées sur une sémantique adaptée, axée sur des critères intuitifs pour les utilisateurs.

Un poids peut en outre être attribué aux attributs et/ou aux associations transformés, lesquels permettront ultérieurement de personnaliser la navigation d'un utilisateur.

Il convient de noter qu'il est en outre possible de procéder à un enrichissement de dictionnaires par typologie de produit et ce, afin de rendre le traitement de plus en plus intelligent (ils peuvent, le cas échéant, être sélectionnés en fonction d'attributs des entités, comme décrit ci-dessus). Ceci peut être réalisé par exemple au moment de l'extraction des informations pour la valorisation de la nouvelle base de données.

Parallèlement à la création d'attributs par transformation, le procédé peut comprendre une étape d'analyse par reconnaissance d'images (étape S80) liées à des entités de la base de données. Il peut en outre comprendre une étape de création d'associations (S100) entre ces entités à partir de l'analyse par reconnaissance d'images.

L'analyse par reconnaissance d'images est une analyse par un système informatique d'images et de leurs éléments constitutifs, de leurs propriétés et de leurs corrélations spatiales. L'analyse des corrélations spatiales permet de créer les associations entre ces images et donc entre les entités correspondantes.

Plus en détail, cette analyse peut tout d'abord comprendre une segmentation de l'image. Ceci permet de découper l'image en fonction des différents objets qui la composent. Ensuite, l'analyse peut comprendre une indexation, c'est-à-dire que pour chaque image préalablement segmentée, des propriétés peuvent être extraites, lesquelles quantifient par exemple la forme, la couleur, la texture, la configuration spatiale de l'image. L'image est donc codée selon un modèle mathématique donné. L'analyse des corrélations entre images permet ensuite de dégager des proximités entre images.

Un classement peut être alors opéré. Par exemple, pour chaque image, des liens vers les dix images les plus proches selon l'analyse d'images sont stockés comme attributs de cette image.

Ceci permet de disposer dans la base de données d'associations entre entités, basées pour partie sur des liens sémantiques orientés utilisateur et pour partie sur des ressemblances visuelles.

Les associations visuelles entre articles faisant intervenir du design (par exemple des articles de mode) sont difficilement objectivables selon des termes usuels. Ainsi, une analyse d'images permet au contraire d'objectiver, selon un modèle de corrélation donné, des associations entre produits représentés dans les images puis d'opérer un classement entre ces associations.

Ces associations visuelles permettront ultérieurement à un utilisateur du site de trouver visuellement un produit qui lui plaît à partir d'une couleur, d'un motif ou d'une forme de produit sélectionné.

Ceci permettra également une navigation basée à la fois sur des critères formulables par l'utilisateur et sur des critères non aisément formulables. L'efficacité de la navigation de l'utilisateur s'avère, à l'expérience, accrue lorsqu'il dispose à la fois de liens visuels et de liens lexicaux.

La navigation sera en outre encore améliorée grâce des liens proposés à l'utilisateur, basés sur des méta données créées (étape S110) à partir des associations visuelles et sémantiques créées entre les entités, à partir des attributs créés et de l'analyse par reconnaissance d'images. Par exemple, lorsqu'un utilisateur naviguant sur le site a tendance à utiliser souvent un lien de catégorie ou type de vêtement donné et un lien visuel donné; un méta lien combinant les deux liens précédent pourra être créé.

Une base de données, munie des associations décrites ci-dessus est alors stockée.

Un index peut ensuite être créé ou mis à jour à partir de cette base de données (étape S130). Cet index permet à son tour de créer ou de mettre à jour (S140) un site Internet, par exemple un hôte Internet tel qu'un ordinateur serveur relié à Internet par le protocole TCP-IP.

Ce site est par exemple un site de commerce électronique à destination des particuliers ou, de préférence, un site de guide d'aide à l'achat.

Le serveur du site est programmé de sorte à réactualiser le site en fonction de changements apportés à la base de données, puis à l'index.

En particulier, le serveur pourra par exemple effectuer des requêtes dans l'index ou directement dans la base de données afin de permettre à un utilisateur d'effectuer un recherche de produits basée sur une seule image numérisée (par exemple une image au format .gif ou jpg). Plus précisément, le procédé pourra comprendre (étape S150) des étapes de :
- réception d'une image téléchargée vers un site Internet, par exemple le site du serveur;
- analyse par reconnaissance d'image de l'image téléchargée ;
- comparaison avec des images liées à des entités de la base de données ; et
- sélection d'associations dans la base ou l'index à partir de la comparaison à l'étape précédente.

Compte tenu de la façon dont il est créé, le site, par exemple un site de guide à l'achat, peut se spécialiser sur des produits difficilement descriptibles à un utilisateur, tels que des produits dans l'équipement de la personne et de la maison : vêtements femme, homme et enfant, accessoires de mode, chaussures, sport, puériculture, meubles et décoration et linge de maison (draps, serviettes, nappes, ...). En outre, le site de guide à l'achat pourra proposer des produits plus classiquement disponibles en ligne, tels que des produits électroménager et produits techniques (TV, Home cinéma, Hi-fi, informatique ...).

Le site Internet du guide à l'achat sera par exemple prévu de telle sorte que des critères utilisateurs soient collectés au cours de la navigation. De tels critères sont par exemple des données déclarées par l'utilisateur lui-même (en renseignant un profil), des corrélations ou associations établies entre produits ou types/catégories de produits visités ou sélectionné par l'utilisateur sur le site. Les associations établies pourront alors servir à sélectionner des associations stockées dans la base de données ou dans l'index, de sorte que la navigation ultérieure de l'utilisateur pourra être personnalisée en utilisant ces associations. Ainsi, des produits ou des gammes ou types de produits liés à un produit donné pourront être proposés à la volée à l'utilisateur lors de sa navigation sur le site. En outre, une architecture personnalisée pourra être mise à disposition de l'utilisateur au gré de sa navigation et en fonction de celle-ci. Le but est ici de rendre une recherche de produits simple et intuitive pour l'utilisateur.

Le site pourra proposer de nombreuses fonctionnalités utiles, parmi lesquelles le stockage de l'historique de recherches d'un utilisateur après sa visite du site, de sorte à les retrouver lors de sa prochaine visite. Le site pourra en outre proposer une navigation selon des critères prédéfinis.

A titre d'exemple, il est maintenant décrit en détail un procédé de traitement par ordinateur d'une base de données de produits de consommation, selon un mode de réalisation de l'invention. Le contexte est le suivant : des produits sont rattachés à certaines enseignes (externes), qui sont partenaires de l'utilisateur du procédé selon l'invention. Ces produits sont traités, en interne, par l'utilisateur du procédé.

A partir du ou des fichiers sources (ou base de données initiale, étape S10) relatifs aux produits, on affecte les valeurs existante et identifiées dans la base de données (étape S20). En fonction de la nature des attributs, la valeur est rattachée soit au niveau du produit, soit au niveau du variant. Certains traitements d'enrichissements systématiques (S50) sont réalisés à ce stade. Typiquement, la codification des produits et des variants (par exemple 4702143040169GAW) est modifiée (elle devient par exemple CY_4702143040169GAW) et on lui associe un identifiant interne (par exemple 473723).

On définit le rattachement d'un variant à un produit et on génère des adresses URL pour la récupération des images. On génère également des adresses URLs du produit sur le site de l'enseigne (par exemple celle qui permet de renvoyer un internaute vers le site de l'enseigne propriétaire du produit).

A partir des catégories initiales (par exemple celles des enseignes correspondant aux produits) et des catégories utilisées en interne, une table de correspondance (mapping) est mise en place pour permettre, lors d'un import ultérieur, que les produits se retrouvent automatiquement positionnés selon un format interne (par exemple sous les rubriques attendues).

Cette catégorisation se fait au niveau produit et sera héritée par les différents variants du produit. Par exemple, le produit "4702143040169GAW" a pour code de catégorie "176801".

Dans la table de correspondance, on trouve ainsi une entrée pour le code catégorie de cette enseigne ("176801") et un code interne (par exemple "3.4.1"). En interne, "3.4.1" correspond par exemple à une catégorie "Femme/Habillement/Robe". Cette mise en correspondance permettra ainsi d'accéder à un produit lors de la navigation.

A partir de règles de gestions définies préalablement, un certain nombre de propriétés sont alors enrichies ou normalisées:
- Le prix : chaque enseigne a sa propre gestion des prix (entiers, décimaux, séparateur, chaîne fixe), l'ensemble des prix est donc traité pour obtenir un format de sortie, par exemple du type : "15.99";
- La marque : pour certaines enseignes, la marque se trouve dans le libellé du produit. A partir d'un dictionnaire de marques par enseigne, on extrait la marque pour la placer dans la propriété correspondante (étape S50).
- Le style : un style est affecté aux produits lorsque cela a du sens. Cet enrichissement se base sur l'enseigne et la marque du produit pour en définir le style (par exemple le style "habillé", étape S50) ;
- La taille : chaque partenaire (par exemple une enseigne) à sa propre gestion des tailles. Une conversion est donc opérée pour obtention d'une logique interne propre au site; et
- La transformation de codes en valeurs : un certains nombre de valeurs n'apparaissent pas en clair dans les exports des enseignes ; c'est donc par l'intermédiaire de tables de correspondances que la récupération de la valeur en clair s'effectue.

Les partenaires étant typiquement des enseignes de type "vente par correspondance" (VPC), une grande partie des informations est regroupée dans le descriptif du produit (selon une logique de catalogue).

Comme expliqué plus haut, une opération d'extraction de ces informations est effectuée. Deux étapes sont réalisées :
- La mise à disposition des informations permettant la mise en oeuvre du procédé; et
- L'enrichissement de dictionnaires par typologie de produit pour rendre le traitement de plus en plus intelligent.

Ensuite, à partir du libellé du produit, un moteur sémantique va parvenir à définir un type principal (par exemple : Textile) et un type secondaire (par exemple: robe), en s'appuyant sur ses dictionnaires sémantiques (ceci est une partie de l'étape S70).

Le type du produit étant défini, ce moteur peut alors filtrer le contenu de la description du produit à l'aide de ses dictionnaires sémantiques mais également à l'aide de ceux définis spécifiquement pour le type de produit extrait (par exemple : textile.robe), étape S70.

Après avoir extrapolé les termes des dictionnaires dans leur différentes formes possibles (féminin, pluriels, conjugaisons etc.), le moteur va extraire de la description du produit les mots similaires dans un contexte sémantique défini (il est par exemple pris en compte la ponctuation et la proximité des mots), étape S70.

Sont alors extraits autant d'attributs que possible afin d'enrichir les propriétés du produit en question, étape S70.

En ce qui concerne maintenant les images : lors de la génération des URL correspondant aux images sur le site de l'enseigne, une table de travail est construite pour y placer une liste d'image à télécharger, à redimensionner et à renommer pour être utilisée sur le site. Ceci permet d'obtenir une appellation normalisée et un format uniforme d'images (par exemple : carré).

Une fois ce travail effectué, les images font l'objet du traitement de l'étape S80. Par exemple, des flux de trois éléments sont traités:
- Une image ;
- Un identifiant produit/article; et
- Une catégorie d'appartenance.

L'analyse par reconnaissance d'images est une solution permettant de définir des similarités visuelles entre les produits, comme expliqué plus haut (étape S80).

Pour optimiser ce traitement et en fonction du besoin, on peut donner la priorité à la couleur ou à la forme (par exemple dans un rapport égal, modifiable selon l'expérience). On peut également choisir de travailler sans notion de catégorie ou uniquement sur les produits de même catégorie. La définition d'un seuil de ressemblance est également possible : ce seuil étant un indice à partir duquel les produits ne sont plus considérés comme étant similaires.

Une fois le paramétrage d'analyse d'images effectué, il est défini pour chaque image ou visuel extrait de ces images, les dix images ou visuels les plus proches. Il est donc obtenu un ensemble de groupes de produits similaires, formant un index, composé d'un ensemble de listes d'identifiant (étape S100).

Cet index est ensuite importé en base pour valider la disponibilité des produits associés et mettre en avant ces liens sur le site (étapes S130 - 150).

Un outil interne peut, le cas échéant, être utilisé afin d'effectuer différentes opérations sur les données des enseignes. Cet outil a pour but de paramétrer les différents mécanismes intervenant dans le procédé selon l'invention et de rectifier certains enrichissements automatiques erronés. Il permet d'accéder et de modifier l'ensemble des attributs enrichis par les processus décrit plus haut.

Un autre outil peut le cas échéant être utilisé pour effectuer une mise à jour partielle, c'est-à-dire la mise à jour d'un ou plusieurs attributs relatifs à un partenaire.

L'invention n'est cependant pas limitée aux variantes décrites ci-avant mais est susceptible de nombreuses autres variations aisément accessibles à l'homme du métier.

## Revendications

1. Procédé de traitement par ordinateur d'une base de données de produits de consommation, comprenant les étapes de :
- fourniture (S10) d'une base de données comprenant des entités correspondant à des produits de consommation et des attributs de ces entités ;
- création d'attributs (S70) de sémantique différente des attributs des entités fournis avec la base de données, par transformation sémantique à l'aide d'un dictionnaire numérique;
- création d'associations (S90) entre des entités de la base de données à partir des attributs créés.

2. Le procédé de traitement selon la revendication 1, dans lequel, à l'étape de fourniture, la base de données comprend des liens entre les entités et des images correspondant à ces entités ;
le procédé comprenant en outre des étapes :
- d'analyse par reconnaissance d'images (S80) de ces images; et
- de création d'associations (S100) entre ces entités à partir de l'analyse par reconnaissance d'images.

3. Le procédé de traitement selon la revendication 2, **caractérisé en ce que** le procédé comprend en outre, une étapes de :
- création de méta données (S110) à partir des associations créés entre les entités, à partir des attributs créés et de l'analyse par reconnaissance d'images.

4. Le procédé de traitement selon la revendication 1, 2 ou 3, **caractérisé en ce que** le procédé comprend en outre, des étapes (S150) de :
- réception d'une image téléchargée via un site Internet;
- analyse par reconnaissance d'image de l'image téléchargée
- comparaison avec des images liées à des entités de la base de données ; et
- sélection d'associations dans la base à partir de la comparaison à l'étape précédente.

5. Le procédé de traitement selon l'une quelconque des revendications 1 à 4,
**caractérisé en ce que**:
- à l'étape de fourniture de la base de données, certains des attributs fournis sont des textes descriptifs d'entités ; et
- à l'étape de création d'attributs de sémantique différente, la transformation sémantique opère sur des attributs obtenus à partir de ces textes descriptifs.

6. Le procédé de traitement selon l'une quelconque des revendications 1 à 5, **caractérisé en ce que** le procédé comprend en outre, avant l'étape de fourniture de la base de données, des étapes :
- de valorisation (S20) de la base de donnée à partir d'une base de données initiale ; et
- d'analyse de caractères (S30) de données de la base de données initiale non valorisées dans la base de données.

7. Le procédé de traitement selon la revendication 6, **caractérisé en ce que** le procédé comprend en outre, après l'étape de fourniture et avant l'étape de création d'attributs de sémantique différente, une étape (S40) :
- d'expansion, de traitement puis de réagrégation d'au moins certains des attributs de la base de données afin de normaliser ces attributs.

8. Le procédé de traitement selon la revendication 7, **caractérisé en ce que** le procédé comprend en outre, avant l'étape de création d'attributs, une étape :
- d'enrichissement sémantique (S50) de la base de données à l'aide d'une table de correspondance.

9. Le procédé de traitement selon l'une quelconque des revendications 1 à 8, **caractérisé en ce que** le procédé comprend en outre, une étape de :
- mise à jour d'un site Internet (S130, S140) à l'aide de la base de données.

10. Système informatique comprenant des moyens de mise en oeuvre des étapes du procédé selon l'une quelconque des revendications 1 à 9.

11. Site Internet adapté à être mis à jour selon le procédé de la revendication 9.
